# FASCICULE DE BREVET EUROPEEN

(11) **EP 3 754 919 B1**
(45) Date de publication et mention de la délivrance du brevet: **16.06.2021**
(21) Numéro de dépôt: 20179881.6
(22) Date de dépôt: 15.06.2020
(51) Int. Cl.: H04L 12/807, H04L 1/16

(54) **PROCÉDÉ D'ACQUITTEMENT DE TRAMES**
FRAMEBESTÄTIGUNGSVERFAHREN
FRAME ACKNOWLEDGE METHOD

(30) Priorité: 18.06.2019 FR 1906502
(43) Date de publication de la demande: 23.12.2020
(73) Titulaire: Sagemcom Energy & Telecom SAS, 92500 Rueil-Malmaison (FR)
(72) Inventeur: TEBOULLE, Henri, 92500 Rueil Malmaison (FR); HARNAY, Franck, 92500 Rueil Malmaison (FR)
(74) Mandataire: Cabinet Le Guen Maillet

(56) Documents cités:
- WO-A2-2009/158106

## Description

### DOMAINE TECHNIQUE

La présente invention concerne des acquittements de trames ascendantes dans un système de communication sans-fil, et est particulièrement adaptée aux systèmes de communication de type LPWAN (« Low-Power Wide Area Network » en anglais) répandus dans l'Internet des Objets (« Internet of Things » en anglais).

### ETAT DE LA TECHNIQUE ANTERIEURE

L'Internet des Objets émerge. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple pour effectuer une collecte de relevés de consommations électriques ou de consommations d'eau. L'Internet des Objets est considéré comme la troisième évolution de l'Internet, baptisée Web 3.0. L'Internet des Objets est en partie responsable de l'accroissement actuel du volume de données à transmettre et à stocker, et est ainsi à l'origine de ce qu'on appelle le « Big Data ». L'Internet des Objets revêt un caractère universel pour désigner une mise en communication d'objets aux usages variés, par exemple dans le domaine industriel, agro-alimentaire, de la e-santé ou de la domotique.

Pour permettre à des objets communicants, aussi appelés dispositifs terminaux (« end-device » en anglais), de communiquer dans le cadre de l'Internet des Objets, des passerelles de collecte (« gathering gateways » en anglais) situées sur des points géographiquement hauts sont déployées par un opérateur. Hors opérations de maintenance, ces passerelles de collecte sont typiquement fixes et permanentes. On peut par exemple citer sur ce modèle les réseaux SigFox (marque déposée) ou ThingPark (marque déposée). Ces passerelles de collecte communiquent avec les dispositifs terminaux grâce à des communications radio moyenne ou longue portée de type LPWAN, comme par exemple la technologie LoRaWAN (« Long Range Wide-Area Network » en anglais), aussi connue sous le diminutif « LoRa » (« Long Range » en anglais) du nom de l'alliance faisant la promotion de la technologie LoRaWAN. Ces passerelles de collecte servent ainsi de relais entre les dispositifs terminaux et un serveur (réseau cœur) configuré pour traiter des informations remontées par les dispositifs terminaux et pour envoyer des messages (e.g. instructions) auxdits dispositifs terminaux.

Les dispositifs terminaux émettent à destination d'un serveur, typiquement à intervalles réguliers, des trames ascendantes qui contiennent les données à collecter. Pour que chaque dispositif terminal concerné sache si le serveur a effectivement reçu les données qu'il a transmises, le serveur transmet en réponse des trames descendantes qui servent notamment à acquitter les trames ascendantes en question. Chaque trame ascendante effectivement reçue est ainsi acquittée, en mode point-à-point (« unicast mode » en anglais), par le serveur. De tels systèmes de communication de type LPWAN sont typiquement destinés à permettre la collecte de données auprès d'une multitude de dispositifs terminaux, comme c'est le cas par exemple dans les systèmes de gestion automatisée de comptage AMM (« Advanced Meter Management » en anglais) supervisant les réseaux modernes de distribution électrique. Ainsi, du fait du grand nombre de dispositifs terminaux à gérer, une quantité importante de ressources réseau (taux d'occupation du médium de communication) est utilisée pour l'acquittement des trames ascendantes. Un exemple de procédé d'acquittement de trames ascendantes est décrit dans le document WO2009/158106A2.

Il est alors souhaitable de pallier ces inconvénients de l'état de la technique. Il est notamment souhaitable de fournir une solution qui permette de réduire le taux d'occupation du médium de communication dans de tels systèmes de communication de type LPWAN, plus particulièrement en ce qui concerne l'acquittement des trames ascendantes.

### EXPOSE DE L'INVENTION

Un objet de la présente invention est de proposer un procédé d'acquittement de trames ascendantes transmises depuis des dispositifs terminaux vers un équipement serveur dans un système de communication, le procédé étant implémenté par l'équipement serveur, le procédé comportant les étapes suivantes pour chaque dit dispositif terminal : recevoir dudit dispositif terminal un message de demande d'enregistrement auprès de l'équipement serveur ; affecter ledit dispositif terminal à un groupe, et au sein dudit groupe, à un sous-groupe ; obtenir une adresse à utiliser par ledit dispositif terminal pour communiquer ultérieurement dans le système de communication, une partie de ladite adresse identifiant ledit groupe, une autre partie de ladite adresse identifiant ledit sous-groupe et encore une autre partie de ladite adresse identifiant ledit dispositif terminal au sein dudit sous-groupe ; et transmettre audit dispositif terminal un message de confirmation d'enregistrement, incluant l'adresse obtenue, ainsi qu'une information représentant un instant estimé de prochaine transmission d'acquittement, dit acquittement de masse, commun audit groupe. Le procédé comporte en outre les étapes suivantes, pour chaque groupe : vérifier, pour chaque sous-groupe dudit groupe, si une trame ascendante a été reçue de chaque dispositif terminal affecté audit sous-groupe depuis la transmission du précédent acquittement de masse pour ledit groupe ; construire un acquittement de masse dans lequel chaque sous-groupe dudit groupe est associé à une même information acquittant lesdites trames ascendantes reçues de tous les dispositifs terminaux dudit sous-groupe en cas de vérification positive, et à une même information n'acquittant aucune trame ascendante reçue de dispositifs terminaux dudit sous-groupe en cas de vérification négative, l'acquittement de masse incluant en outre une information représentant un instant estimé de prochaine transmission d'acquittement de masse pour ledit groupe ; et diffuser l'acquittement de masse, et acquitter en mode point-à-point les trames ascendantes reçues qui n'ont pas été acquittées par l'acquittement de masse. Ainsi, grâce aux acquittements de masse et à la définition des groupes et sous-groupes, il est possible en une seule trame descendante d'acquitter de nombreuses trames ascendantes. Cette approche est particulièrement adaptée aux systèmes de gestion automatisée de comptage AMM, dans lesquels les dispositifs terminaux sont des compteurs (e.g. compteurs électriques) qui envoient régulièrement des relevés de comptage et pour lesquels les trames ascendantes sont généralement effectivement reçues par l'équipement serveur en temps voulu. De plus, le fait de construire les adresses des dispositifs terminaux à partir des groupes et des sous-groupes formés permet auxdits dispositifs terminaux de déduire aisément à quel groupe et sous-groupe ils appartiennent, sans avoir recours à des échanges supplémentaires de configuration / souscription.

Selon un mode de réalisation particulier, chaque sous-groupe est associé à un bit dans un champ de l'acquittement de masse, ledit bit est mis à une première valeur prédéfinie pour acquitter les trames ascendantes de tous les dispositifs terminaux du sous-groupe associé et ledit bit est mis à une seconde valeur prédéfinie pour acquitter aucune des trames ascendantes des dispositifs terminaux du sous-groupe associé. Ainsi, l'acquittement des trames ascendantes est effectué de manière efficace en termes de consommation de ressources réseau.

Selon un mode de réalisation particulier, chaque message de confirmation d'enregistrement inclut en outre une information de référence temporelle permettant une synchronisation de mise à l'heure du dispositif terminal en question, et chaque acquittement de masse inclut en outre aussi une telle information de référence temporelle. Ainsi, les dispositifs terminaux peuvent aisément se synchroniser temporellement dans le système de communication.

Selon un mode de réalisation particulier, l'information représentant un instant estimé de prochaine transmission d'acquittement de masse pour un dit groupe est exprimée de manière relative par rapport à ladite référence temporelle. Ainsi, moins de bits sont nécessaires pour représenter ladite information.

Selon un mode de réalisation particulier, chaque acquittement de masse de chaque groupe est diffusé en utilisant une adresse de diffusion construite sur la base des adresses des dispositifs terminaux dudit groupe, en remplaçant par une valeur réservée la partie de ladite adresse servant à identifier un sous-groupe et la partie de ladite adresse servant à identifier un dit dispositif terminal au sein d'un dit sous-groupe. Ainsi, la diffusion des acquittements de masse est aisée.

Selon un mode de réalisation particulier, chaque message de confirmation d'enregistrement inclut en outre une valeur de paramètre K définissant, dans l'adresse du dispositif terminal auquel le message de confirmation d'enregistrement est adressé, la largeur de représentation en nombre de bits des sous-groupes du groupe auquel ledit dispositif terminal est affecté. Ainsi, le nombre de sous-groupes peut être aisément ajusté.

Selon un mode de réalisation particulier, chaque message de confirmation d'enregistrement inclut en outre une valeur de paramètre M de telle sorte que la différence M-K définit, dans l'adresse du dispositif terminal auquel le message de confirmation d'enregistrement est adressé, la largeur de représentation en nombre de bits des identifiants des dispositifs terminaux du sous-groupe concerné. Ainsi, le nombre de dispositifs terminaux par sous-groupe peut être aisément ajusté.

Selon un mode de réalisation particulier, chaque identifiant de groupe fournit implicitement une valeur de paramètre M de telle sorte que la différence M-K définit, dans l'adresse du dispositif terminal auquel le message de confirmation d'enregistrement est adressé, la largeur de représentation en nombre de bits des identifiants des dispositifs terminaux du sous-groupe concerné, la valeur du paramètre M étant alors obtenue de la manière suivante : parcourir consécutivement les bits de poids fort pour détecter à quel index se trouve le premier bit en séquence à avoir telle ou telle valeur en partant du bit de poids le plus fort ; et utiliser une table, ou une formule, de conversion prédéfinie connue dudit dispositif terminal et de l'équipement serveur entre cet index et la valeur du paramètre M. Ainsi, le nombre de dispositifs terminaux par sous-groupe peut être aisément ajusté, et ce de manière implicite.

L'invention concerne également un procédé de gestion d'acquittement de trames ascendantes transmises depuis des dispositifs terminaux vers un équipement serveur dans un système de communication, le procédé étant implémenté par chaque dispositif terminal, le procédé comportant les étapes suivantes : transmettre à l'équipement serveur un message de demande d'enregistrement auprès de l'équipement serveur ; recevoir de l'équipement serveur un message de confirmation d'enregistrement incluant une adresse à utiliser par ledit dispositif terminal pour communiquer ultérieurement dans le système de communication, une partie de ladite adresse identifiant un groupe auquel ledit dispositif terminal est affecté, une autre partie de ladite adresse identifiant un sous-groupe auquel ledit dispositif terminal est affecté au sein dudit groupe et encore une autre partie de ladite adresse identifiant ledit dispositif terminal au sein dudit sous-groupe, le message de confirmation d'enregistrement incluant en outre une information représentant un instant estimé de prochaine transmission d'acquittement, dit acquittement de masse, commun audit groupe ; transmettre une trame ascendante à l'équipement serveur ; recevoir, par diffusion, un acquittement de masse dans lequel chaque sous-groupe dudit groupe est associé à une même information acquittant ou pas lesdites trames ascendantes reçues de tous les dispositifs terminaux dudit sous-groupe, l'acquittement de masse incluant en outre une information représentant un instant estimé de prochaine transmission d'acquittement de masse pour ledit groupe ; et recevoir un acquittement en mode point-à-point lorsque la trame ascendante n'a pas été acquittée par l'acquittement de masse.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter l'un ou l'autre des procédés mentionnés ci-dessus, lorsque ledit programme est exécuté par le processeur. L'invention concerne également un support de stockage d'informations stockant un tel programme d'ordinateur.

L'invention concerne également un équipement serveur configuré pour effectuer un acquittement de trames ascendantes transmises depuis des dispositifs terminaux vers l'équipement serveur dans un système de communication, l'équipement serveur implémentant pour chaque dit dispositif terminal : des moyens pour recevoir dudit dispositif terminal un message de demande d'enregistrement auprès de l'équipement serveur ; des moyens pour affecter ledit dispositif terminal à un groupe, et au sein dudit groupe, à un sous-groupe ; des moyens pour obtenir une adresse à utiliser par ledit dispositif terminal pour communiquer ultérieurement dans le système de communication, une partie de ladite adresse identifiant ledit groupe, une autre partie de ladite adresse identifiant ledit sous-groupe et encore une autre partie de ladite adresse identifiant ledit dispositif terminal au sein dudit sous-groupe ; des moyens pour transmettre audit dispositif terminal un message de confirmation d'enregistrement, incluant l'adresse obtenue, ainsi qu'une information représentant un instant estimé de prochaine transmission d'acquittement, dit acquittement de masse, commun audit groupe. De plus, l'équipement serveur implémente pour chaque groupe : des moyens pour vérifier, pour chaque sous-groupe dudit groupe, si une trame ascendante a été reçue de chaque dispositif terminal affecté audit sous-groupe depuis la transmission du précédent acquittement de masse pour ledit groupe ; des moyens pour construire un acquittement de masse dans lequel chaque sous-groupe dudit groupe est associé à une même information acquittant lesdites trames ascendantes reçues de tous les dispositifs terminaux dudit sous-groupe en cas de vérification positive, et à une même information n'acquittant aucune trame ascendante reçue de dispositifs terminaux dudit sous-groupe en cas de vérification négative, l'acquittement de masse incluant en outre une information représentant un instant estimé de prochaine transmission d'acquittement de masse pour ledit groupe ; et des moyens pour diffuser l'acquittement de masse, et acquitter en mode point-à-point les trames ascendantes reçues qui n'ont pas été acquittées par l'acquittement de masse.

L'invention concerne également un dispositif terminal configuré pour effectuer une gestion d'acquittement de trames ascendantes transmises vers un équipement serveur dans un système de communication comportant d'autres dispositifs terminaux, ledit dispositif terminal implémentant : des moyens pour transmettre à l'équipement serveur un message de demande d'enregistrement auprès de l'équipement serveur ; des moyens pour recevoir de l'équipement serveur un message de confirmation d'enregistrement incluant une adresse à utiliser par ledit dispositif terminal pour communiquer ultérieurement dans le système de communication, une partie de ladite adresse identifiant un groupe auquel ledit dispositif terminal est affecté, une autre partie de ladite adresse identifiant un sous-groupe auquel ledit dispositif terminal est affecté au sein dudit groupe et encore une autre partie de ladite adresse identifiant ledit dispositif terminal au sein dudit sous-groupe, le message de confirmation d'enregistrement incluant en outre une information représentant un instant estimé de prochaine transmission d'acquittement, dit acquittement de masse, commun audit groupe ; des moyens pour transmettre une trame ascendante à l'équipement serveur ; des moyens pour recevoir, par diffusion, un acquittement de masse dans lequel chaque sous-groupe dudit groupe est associé à une même information acquittant ou pas lesdites trames ascendantes reçues de tous les dispositifs terminaux dudit sous-groupe, l'acquittement de masse incluant en outre une information représentant un instant estimé de prochaine transmission d'acquittement de masse pour ledit groupe ; et des moyens pour recevoir un acquittement en mode point-à-point lorsque la trame ascendante n'a pas été acquittée par l'acquittement de masse.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication dans lequel la présente invention peut être implémentée ;
[Fig. 2] illustre schématiquement un exemple d'architecture matérielle d'un dispositif de communication du système de communication de la Fig. 1 ;
[Fig. 3] illustre schématiquement un exemple d'architecture protocolaire implémentée dans le système de communication de la Fig. 1 ;
[Fig. 4A] illustre schématiquement des champs de messages échangés dans le système de communication de la Fig. 1, dans un mode de réalisation particulier de l'invention ;
[Fig. 4B] illustre schématiquement d'autres champs de messages échangés dans le système de communication de la Fig. 1, dans un mode de réalisation particulier de l'invention ;
[Fig. 4C] illustre schématiquement encore d'autres champs de messages échangés dans le système de communication de la Fig. 1, dans un mode de réalisation particulier de l'invention ;
[Fig. 4D] illustre schématiquement encore d'autres champs de messages échangés dans le système de communication de la Fig. 1, dans un mode de réalisation particulier de l'invention ;
[Fig. 5A] illustre schématiquement des échanges de messages dans le système de communication de la Fig. 1, dans un mode de réalisation particulier de l'invention ;
[Fig. 5B] illustre schématiquement d'autres échanges de messages dans le système de communication de la Fig. 1, dans un mode de réalisation particulier de l'invention ;
[Fig. 6] illustre schématiquement un algorithme d'enregistrement d'un dispositif terminal dans le système de communication de la Fig. 1, dans un mode de réalisation particulier de l'invention ;
[Fig. 7] illustre schématiquement un algorithme de réception de trames ascendantes dans le système de communication de la Fig. 1, dans un mode de réalisation particulier de l'invention ; et
[Fig. 8] illustre schématiquement un algorithme d'acquittement des trames ascendantes reçues dans le cadre de l'algorithme de la Fig. 7.

### EXPOSE DETAILLE DE MODES DE REALISATION

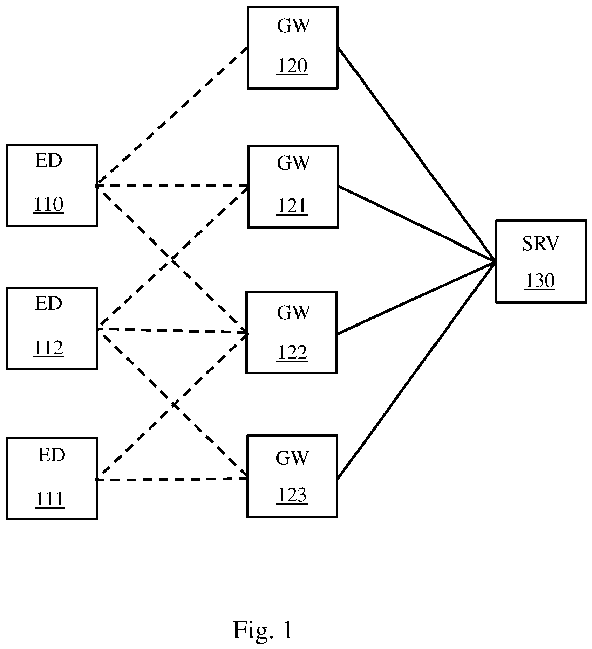

La **Fig. 1** illustre schématiquement un système de communication dans lequel la présente invention peut être implémentée. Le système de communication comporte au moins une passerelle de collecte (notée GW, pour « GateWay » en anglais, sur les Figs.). Quatre passerelles de collecte GW 120, 121, 122, 123 sont représentées à titre purement illustratif sur la Fig. 1. Les passerelles de collecte GW 120, 121, 122, 123 disposent de liens de communication respectifs avec un équipement serveur 130 (noté SRV sur les Figs.) auquel lesdites passerelles de collecte GW 120, 121, 122, 123 sont rattachées.

Dans le système de communication, des messages doivent être remontés sous forme de trames, dites trames ascendantes, depuis un ensemble de dispositifs terminaux (notés ED, pour « End-Device » en anglais, sur les Figs.) jusqu'à l'équipement serveur SRV 130 par l'intermédiaire des passerelles de collecte GW 120, 121, 122, 123. Trois dispositifs terminaux ED 110, 111, 112 sont représentés à titre purement illustratif sur la Fig. 1, mais le système de communication comporte typiquement une grande quantité de dispositifs terminaux ED (plusieurs centaines voire plusieurs milliers de dispositifs terminaux ED).

L'équipement serveur SRV 130 a un rôle de contrôle des dispositifs terminaux ED 110, 111, 112 et de collecte d'informations disponibles auprès des dispositifs terminaux ED 110, 111, 112. Les passerelles de collecte GW 120, 121, 122, 123 ont un rôle de relais entre les dispositifs terminaux ED 110, 111, 112 et l'équipement serveur SRV 130.

Des messages, notamment d'acquittement, doivent aussi être transmis sous forme de trames, dites trames descendantes, depuis l'équipement serveur SRV 130 jusqu'aux dispositifs terminaux ED 110, 111, 112 par l'intermédiaire des passerelles de collecte GW 120, 121, 122, 123.

L'équipement serveur SRV 130 peut être constitué d'une pluralité de serveurs interconnectés. Par exemple, l'équipement serveur SRV 130 est constitué d'un serveur de gestion réseau de type LNS (« LoRaWAN Network Server » en anglais) et d'au moins un serveur applicatif en charge de traiter les données collectées auprès des dispositifs terminaux ED 110, 111, 112.

Pour permettre de remplir leur rôle de relais, chaque passerelle de collecte GW 120, 121, 122, 123 dispose d'au moins une interface radio permettant à ladite passerelle de collecte GW de communiquer avec au moins un dit dispositif terminal ED 110, 111, 112 en s'appuyant sur un réseau de communication sans-fil, et préférentiellement selon une technologie de communication de type LPWAN. Ladite interface radio est par exemple de type LoRa permettant ainsi d'implémenter, au sein du système de communication, un protocole de transmission de données de type LoRaWAN. Ladite interface radio est telle qu'un dispositif terminal ED peut être à portée de communication par voie radio d'une pluralité de passerelles de collecte GW, selon la position géographique dudit dispositif terminal ED par rapport aux passerelles de collecte GW 120, 121, 122, 123 du système de communication et des conditions de transmission par voie radio dans l'environnement dudit dispositif terminal ED et des passerelles de collecte GW 120, 121, 122, 123. C'est le cas par exemple du dispositif terminal ED 110 sur la Fig. 1, qui est à portée de communication par voie radio des passerelles de collecte GW 120, 121 et 122 (matérialisation par des traits pointillés sur la Fig. 1). De plus, chaque passerelle de collecte GW 120, 121, 122, 123 dispose d'au moins une autre interface permettant à ladite passerelle de collecte de communiquer avec l'équipement serveur SRV 130. Par exemple, cette autre interface est une interface filaire permettant de communiquer avec l'équipement serveur SRV 130 via l'Internet.

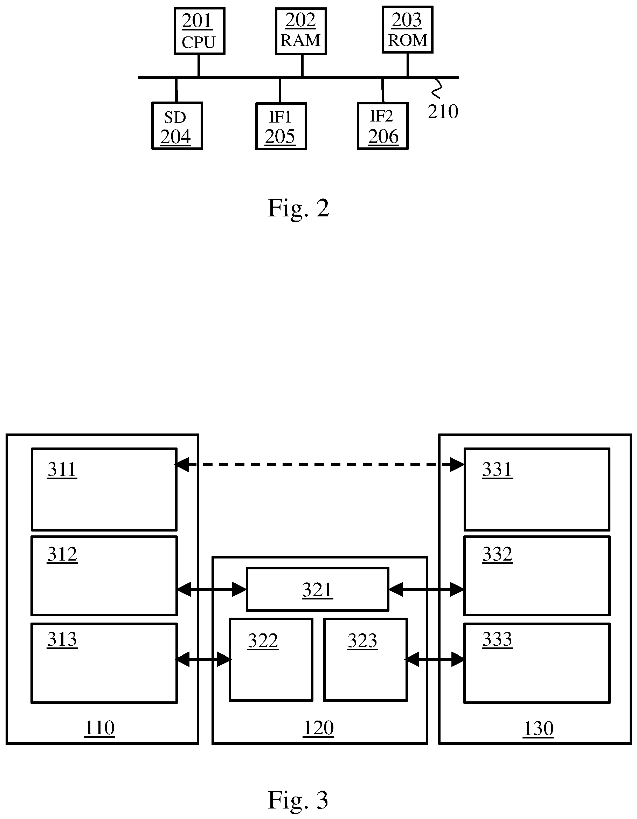

Un exemple d'architecture protocolaire implémentée dans le système de communication pour ainsi permettre aux dispositifs terminaux ED 110, 111, 112 et à l'équipement serveur SRV 130 de communiquer par l'intermédiaire des passerelles de collecte GW 120, 121, 122, 123 est décrit ci-après en relation avec la Fig. 3.

La **Fig. 2** illustre schématiquement un exemple d'architecture matérielle d'un dispositif de communication du système de communication de la Fig. 1. On entend par « dispositif de communication » un dit dispositif terminal ED 110, 111, 112, ou une dite passerelle de collecte GW 120, 121, 122, 123, ou un serveur de l'équipement serveur SRV 130. Ainsi, chaque dispositif terminal ED 110, 111, 112 et/ou chaque passerelle de collecte GW 120, 121, 122, 123 et/ou chaque serveur de l'équipement serveur SRV 130 peuvent être construits sur la base d'une telle architecture matérielle.

Le dispositif de communication en question comporte, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ou un disque dur HDD (« Hard Disk Drive » en anglais) ; une interface de communication IF1 205, et éventuellement une autre interface de communication IF2 206.

Lorsque le dispositif de communication de la Fig. 2 représente un dit dispositif terminal ED 110, 111, 112, l'interface de communication IF1 205 est configurée pour permettre audit dispositif terminal ED 110, 111, 112 de communiquer avec une ou plusieurs dites passerelles de collecte GW 120, 121, 122, 123.

Lorsque le dispositif de communication de la Fig. 2 représente une dite passerelle de collecte GW 120, 121, 122, 123, l'interface de communication IF1 205 est configurée pour permettre à ladite passerelle de collecte GW 120, 121, 122, 123 de communiquer avec un ou plusieurs dits dispositifs terminaux ED, et l'autre interface de communication IF2 206 est configurée pour permettre à ladite passerelle de collecte GW 120, 121, 122, 123 de communiquer avec l'équipement serveur SRV 130.

Lorsque le dispositif de communication de la Fig. 2 représente un serveur de l'équipement serveur SRV 130, l'interface de communication IF1 205 est configurée pour permettre audit serveur de communiquer avec les passerelles de collecte GW 120, 121, 122, 123.

Le processeur 201 est capable d'exécuter des instructions chargées dans la mémoire RAM 202 à partir de la mémoire ROM 203, d'une mémoire externe, d'un support de stockage, ou d'un réseau de communication. Lorsque le dispositif de communication en question est mis sous tension, le processeur 201 est capable de lire de la mémoire RAM 202 des instructions et de les exécuter. Ces instructions forment un programme d'ordinateur causant la mise en œuvre, par le processeur 201, de tout ou partie des algorithmes et étapes décrits ici en relation avec le dispositif de communication en question.

Ainsi, tout ou partie des algorithmes et étapes décrits ici peut être implémenté sous forme logicielle par exécution d'un ensemble d'instructions par une machine programmable, telle qu'un DSP (« Digital Signal Processor » en anglais) ou un microcontrôleur. Tout ou partie des algorithmes et étapes décrits ici peut aussi être implémenté sous forme matérielle par une machine dédiée ou un ensemble de composants (« chipset » en anglais) dédié ou un composant (« chip » en anglais) dédié, tel qu'un FPGA (« Field-Programmable Gate Array » en anglais) ou un ASIC (« Application-Specific Integrated Circuit » en anglais). D'une manière générale, le dispositif de communication en question comporte de la circuiterie électronique adaptée et configurée pour implémenter les algorithmes et étapes qui sont décrits ici en relation avec ledit dispositif de communication.

La Fig. 3 illustre schématiquement un exemple d'architecture protocolaire implémentée dans le système de communication de la Fig. 1. La Fig. 3 représente, de manière illustrative, l'architecture protocolaire de manière répartie entre le dispositif terminal ED 110, la passerelle de collecte GW 120 et l'équipement serveur SRV 130.

Le dispositif terminal ED 110 comporte une couche haute 311 et une couche basse 313, ainsi qu'une couche intermédiaire 312 faisant le lien entre la couche haute 311 et la couche basse 313. La couche haute 311 est une application client. Le dispositif terminal ED 110 peut ainsi comporter plusieurs applications client. La couche intermédiaire 312 implémente le protocole d'échange, par exemple de type LoRaWAN, entre le dispositif terminal ED 110 et l'équipement serveur SRV 130 via la passerelle de collecte GW 120. La couche basse 313 est la couche physique (PHY) de l'interface radio du dispositif terminal ED 110, par exemple de type LoRa, qui permet au dispositif terminal ED 110 de communiquer avec la passerelle de collecte GW 120.

L'équipement serveur SRV 130 comporte une couche haute 331 et une couche basse 333, ainsi qu'une couche intermédiaire 332 faisant le lien entre la couche haute 331 et la couche basse 333. La couche haute 331 est une application serveur. L'équipement serveur SRV 130 peut ainsi comporter plusieurs applications serveur. Il convient de noter que la représentation de la Fig. 3 est une représentation logique, et que les applications serveur peuvent être exécutées sur des équipements respectifs distincts, ou que l'équipement serveur SRV 130 peut être vu comme un ensemble constitué d'une pluralité de machines interconnectées qui implémentent de manière collaborative les fonctionnalités décrites ici.

La couche intermédiaire 332 implémente le protocole d'échange, par exemple de type HTTPS (« HyperText Transfer Protocol Secure » en anglais), entre l'équipement serveur SRV 130 et la passerelle de collecte GW 120. La couche basse 333 est la couche physique (PHY) de l'interface de l'équipement serveur SRV 130 qui permet de communiquer avec la passerelle de collecte GW 120.

La passerelle de collecte GW 120 comporte une première couche basse 322 et une seconde couche basse 323, ainsi qu'un module d'adaptation 321. La première couche basse 322 est la couche physique (PHY) de l'interface radio de la passerelle de collecte GW 120 qui permet de communiquer avec le dispositif terminal ED 110. La seconde couche basse 323 est la couche physique (PHY) de l'interface de la passerelle de collecte GW 120 qui permet de communiquer avec l'équipement serveur SRV 130. Le module d'adaptation 321 est configuré pour convertir les messages reçus via la première couche basse 322 en messages adaptés à la seconde couche basse 323 (trames ascendantes), et vice versa (trames descendantes). Lors de cette conversion, la passerelle de collecte GW 120 peut enrichir ledit message par des informations complémentaires, comme par exemple une indication de niveau de signal reçu RSSI (« Received Signal Strength Indicator » en anglais) déterminé par la passerelle de collecte GW 120 sur réception dudit message en provenance d'un dit dispositif terminal ED.

L'architecture protocolaire représentée sur la Fig. 3 est telle que la couche intermédiaire 312 du dispositif terminal ED 110 communique avec la couche intermédiaire 321 de la passerelle de collecte GW 120, en s'appuyant sur les couches basses respectives du dispositif terminal ED 110 et de la passerelle de collecte GW 120. L'architecture protocolaire représentée sur la Fig. 3 est aussi telle que la couche haute 311 du dispositif terminal ED 110 communique avec la couche haute 331 de l'équipement serveur SRV 130, en s'appuyant sur les couches intermédiaires respectives 312, 321, 332 du dispositif terminal ED 110, de la passerelle de collecte GW 120 et de l'équipement serveur SRV 130. Une même application serveur peut ainsi communiquer avec des applications client respectives exécutées sur autant de dits dispositifs terminaux ED, et un même dit dispositif terminal ED exécutant une pluralité d'applications client peut ainsi communiquer avec autant d'applications serveur exécutées sur l'équipement serveur SRV 130.

Les couches et modules protocolaires représentés peuvent être complétés, notamment par des piles protocolaires permettant à l'équipement serveur SRV 130 d'échanger avec la passerelle de collecte GW 120, notamment pour permettre à l'équipement serveur SRV 130 de configurer, au besoin, la passerelle de collecte GW 120.

Afin de permettre à chaque dit dispositif terminal ED de savoir si des données que ledit dispositif terminal ED 110 a précédemment transmises à l'équipement serveur SRV 130 ont effectivement été reçues, l'équipement serveur SRV 130 acquitte les trames ascendantes reçues en provenance desdits dispositifs terminaux ED. Afin de permettre de préserver des ressources réseau, l'équipement serveur SRV 130 effectue des regroupements par groupes et sous-groupes de dispositifs terminaux ED et procède, par diffusion, à des acquittements de masse communs pour chaque groupe. Dans un acquittement de masse pour un groupe, chaque sous-groupe dudit groupe est associé à une même information acquittant ou pas les trames ascendantes reçues de tous les dispositifs terminaux dudit sous-groupe. Un grand nombre de trames ascendantes peuvent ainsi être acquittées grâce à une seule trame descendante. Lorsqu'il manque une ou plusieurs trames ascendantes dans un sous-groupe, l'équipement serveur SRV 130 effectue des acquittements en mode point-à-point pour les trames ascendantes de ce sous-groupe. Cet aspect est détaillé ci-après.

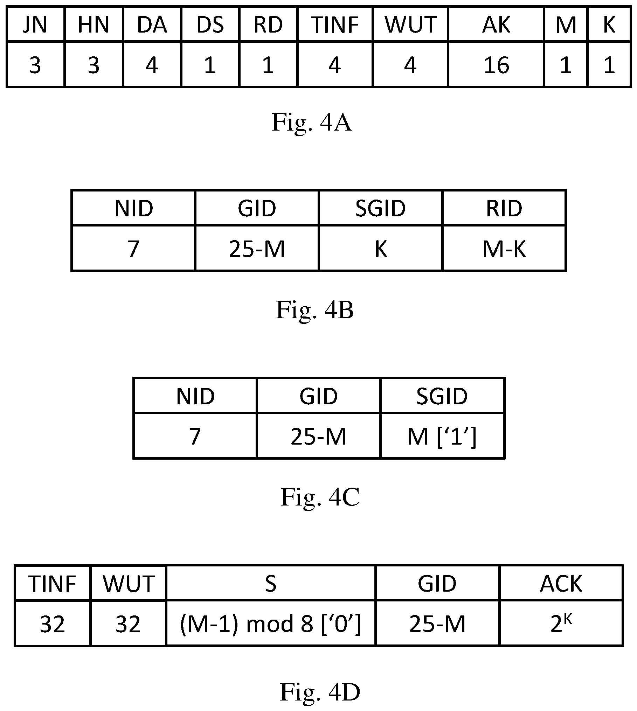

Les Figs. 4A à 4D illustrent schématiquement des champs de messages échangés dans le système de communication de la Fig. 1, dans un mode de réalisation particulier de l'invention.

La **Fig. 4A** représente plus particulièrement des champs utilisés dans un message JOIN-ACCEPT par lequel l'équipement serveur SRV 130 indique à un dispositif terminal ED que ledit dispositif terminal ED a été enregistré dans le système de communication. Les champs de la Fig. 4A sont plus particulièrement :
- JN, JoinNonce, de 3 octets, tel que défini dans les spécifications LoRaWAN ;
- HN, Home_NetID, de 3 octets, tel que défini dans les spécifications LoRaWAN ;
- DA, DevAddr, de 4 octets, tel que détaillé dans la Fig. 4B ;
- DS, DLSettings, de 1 octet, tel que défini dans les spécifications LoRaWAN ;
- RD, RxDelay, de 1 octet, tel que défini dans les spécifications LoRaWAN ;
- TINF, TimeInfo, de 4 octets, qui optionnellement fournit une référence temporelle permettant une synchronisation de mise à l'heure du dispositif terminal ED en question, et qui est par exemple exprimé en secondes depuis le 1^{er} janvier 1970 à minuit ;
- WUT, WakeUpTime, de 4 octets, qui indique un instant estimé de prochaine transmission d'acquittement de masse, et qui est par exemple exprimé en secondes depuis le 1^{er} janvier 1970 à minuit ;
- AK, AppKey_B, de 16 octets, qui fournit optionnellement une clef de chiffrement pour les trames de diffusion (« broadcast » en anglais) ;
- M, qui fournit optionnellement un premier paramètre d'interprétation du champ DA, DevAddr, tel que détaillé dans la Fig. 4B ; et
- K, qui fournit optionnellement un second paramètre d'interprétation du champ DA, DevAddr, tel que détaillé dans la Fig. 4B.

A noter que le champ WUT peut être exprimé de manière relative par rapport au champ TINF, par exemple en nombre de secondes à partir de la référence temporelle fournie par le champ TINF. La taille du champ WUT peut alors être raccourcie, par exemple à 3 octets.

La **Fig. 4B** représente plus particulièrement des champs (ou sous-champs) utilisés pour former le champ DA, DevAddr, mentionné ci-dessus en relation avec la Fig. 4A. Les champs de la Fig. 4B sont plus particulièrement :
- NID, NwkID, de 7 bits, tel que défini dans les spécifications LoRaWAN ;
- GID, GroupID, de 25-M bits (soit 15 bits quand M est égal à 10), qui fournit un identifiant de groupe auquel l'équipement serveur SRV 130 a rattaché le dispositif terminal ED en question ;
- SGID, SubGroupID, de K bits, qui fournit un identifiant de sous-groupe auquel l'équipement serveur SRV 130 a rattaché le dispositif terminal ED en question au sein du groupe identifié par le champ GID ;
- RID, RankID, de M-K bits (soit 2 bits quand M est égal à 10 et K à 8), qui fournit un identifiant de dispositif terminal ED au sein du sous-groupe identifié par SGID.

A noter donc, au vu de ce qui précède, que K < M.

Le paramètre K (cf. champ du même nom à la Fig. 4A) définit la largeur de représentation en nombre de bits des sous-groupes du groupe auquel le dispositif terminal ED concerné est affecté. Le paramètre M (cf. champ du même nom à la Fig. 4A) est fixé de telle sorte que la différence M-K définit la largeur de représentation en nombre de bits des identifiants de dispositifs terminaux ED au sein du sous-groupe auquel le dispositif terminal ED concerné est affecté. Dans la Fig. 4B, le paramètre M définit directement la quantité maximale de dispositifs terminaux ED par groupe, et aussi indirectement la quantité maximale de groupes dans le système de communication.

Comme détaillé par la suite, la présente invention permet à l'équipement serveur SRV 130 d'acquitter, en un seul message, les trames ascendantes émises à destination d'une même application serveur par tous lesdits dispositifs terminaux ED d'un même sous-groupe pendant une période P de durée prédéfinie, sachant que chaque application client de chaque dit dispositif terminal ED ne peut transmettre qu'une seule trame à destination de l'application serveur correspondante au sein de l'équipement serveur SRV 130 pendant ladite période P de durée prédéfinie. La durée de la période P définit donc une cadence d'acquittement (de masse) et est ajustée afin que les remontées de données depuis les applications client vers leurs applications serveur correspondantes respectent cette règle d'une seule trame ascendante par période P entre deux acquittements de masse. La durée de la période P peut donc différer d'une application serveur à une autre.

Dans un mode de réalisation particulier, M est déduit de l'identifiant du groupe (champ GID de la Fig. 4B). Le dispositif terminal ED concerné récupère la valeur du champ DA, DevAddr, et met de côté la partie concernant le champ NID (cf. Fig. 4B). Les bits de poids fort (« most significant bits » en anglais) de la partie restante sont consécutivement parcourus pour détecter à quel index se trouve le premier bit en séquence à avoir telle ou telle valeur (premier bit à 1 en séquence ou premier bit à 0 en séquence), en partant du bit de poids le plus fort. Une table, ou une formule, de conversion prédéfinie connue du dispositif terminal ED et de l'équipement serveur SRV 130 permet de faire la conversion entre cet index et la valeur du paramètre M. Par exemple, si le premier bit à 1 en séquence est le bit de poids le plus fort, M est égal à 8 ; si c'est le bit suivant qui est le premier bit à 1 en séquence, M est égal à 9 ; si c'est le bit suivant qui est le premier bit à 1 en séquence, M est égal à 10 ; etc.). Cela exclut l'utilisation de certaines valeurs du champ GID (et donc du nombre maximal de groupes effectivement utilisables dans le système de communication), mais cela permet de définir dynamiquement la valeur du paramètre M sans avoir à la mentionner explicitement dans le message JOIN-ACCEPT.

La Fig. 4C représente plus particulièrement une constitution d'adresse de diffusion (« broadcast address » en anglais) compatible avec le champ DA, DevAddr, mentionné ci-dessus en relation avec la Fig. 4A. L'ensemble des M bits des champs SGID et RID de la Fig. 4B est mis à une valeur réservée (e.g. tous les bits à 1), non utilisée comme adresse de communication point-à-point et connue de tout dispositif terminal ED susceptible de rejoindre le système de communication. L'adresse de diffusion ainsi définie est alors utilisée pour diffuser des trames descendantes à l'attention de l'ensemble des dispositifs terminaux ED appartenant au groupe identifié par le champ GID dans le système de communication identifié par le champ NID.

La **Fig. 4D** représente plus particulièrement des champs utilisés dans un message d'acquittement de masse MACK par lequel l'équipement serveur SRV 130 acquitte les trames ascendantes par sous-groupe d'un groupe de dits dispositifs terminaux ED. Les champs de la Fig. 4D sont plus particulièrement :
- TINF, TimeInfo, de 32 bits (soit 4 octets), qui optionnellement fournit une référence temporelle permettant une synchronisation de mise à l'heure des dispositifs terminaux ED, et qui est par exemple exprimé en secondes depuis le 1^{er} janvier 1970 à minuit ;
- WUT, WakeUpTime, de 32 bits (soit 4 octets), qui indique un instant estimé de prochaine transmission d'acquittement de masse, qui est exprimé en secondes depuis le 1^{er} janvier 1970 à minuit ;
- S, Stuffing, de (M-1) modulo 8 bits de valeur par défaut (e.g. de valeur nulle), qui permet de faire un alignement sur un nombre entier d'octets ;
- GID, GroupID, de 25-M bits, qui permet d'identifier le groupe auquel le message d'acquittement de masse MACK est adressé par l'équipement serveur SRV 130 ;
- ACK, de 2^{K} bits, dont chaque bit d'index *k* ∈ [0; 2*^{K}* - 1] permet d'identifier chaque sous-groupe, dans le groupe identifié par le champ GID, pour lequel un acquittement de trames ascendantes est fourni par l'équipement serveur SRV 130.

Ainsi, lorsque le k-ième bit du champ ACK est positionné à une première valeur prédéfinie (e.g. à la valeur « 1 »), l'équipement serveur SRV 130 acquitte les trames ascendantes émises à destination d'une même application serveur par tous lesdits dispositifs terminaux ED du sous-groupe identifié par l'index *k* ∈ [0; 2*^{K}* - 1] pendant une période P de durée prédéfinie. Lorsque l'équipement serveur SRV 130 implémente une pluralité d'applications serveur, l'application serveur concernée est identifiée grâce à un champ FPORT, tel que défini dans les spécifications LoRaWAN, d'un entête (non représenté sur la Fig. 4D) du message d'acquittement de masse MACK.

A noter qu'ici aussi le champ WUT peut être exprimé de manière relative par rapport au champ TINF, par exemple en nombre de secondes à partir de la référence temporelle fournie par le champ TINF.

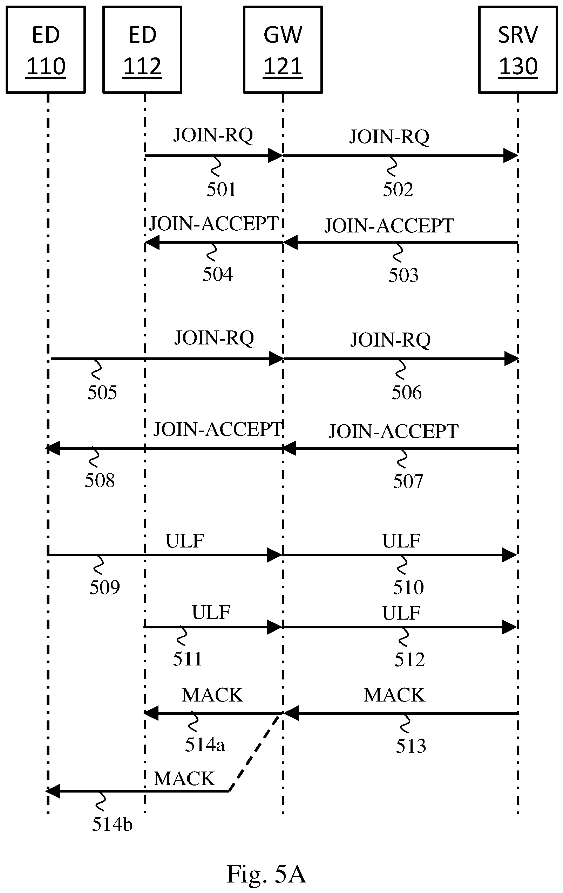

La **Fig. 5A** illustre schématiquement des échanges de messages dans le système de communication de la Fig. 1, dans un mode de réalisation particulier de l'invention. De manière purement illustrative, la Fig. 5A montre ces échanges entre l'équipement serveur SRV 130, d'une part, et les dispositifs terminaux ED 110 et 112, d'autre part, par le biais de la passerelle de collecte GW 121.

Dans une étape 501, le dispositif terminal ED 112 envoie un message JOIN-RQ de demande d'enregistrement auprès de l'équipement serveur SRV 130. Ce message JOIN-RQ inclut un identifiant unique, DevEUI, du dispositif terminal ED 112. Ce message JOIN-RQ correspond préférentiellement au message « join-request » dans les spécifications LoRaWAN. Ce message JOIN-RQ est capté au moins par la passerelle de collecte GW 121, qui le relaie à l'équipement serveur SRV 130 dans une étape 502.

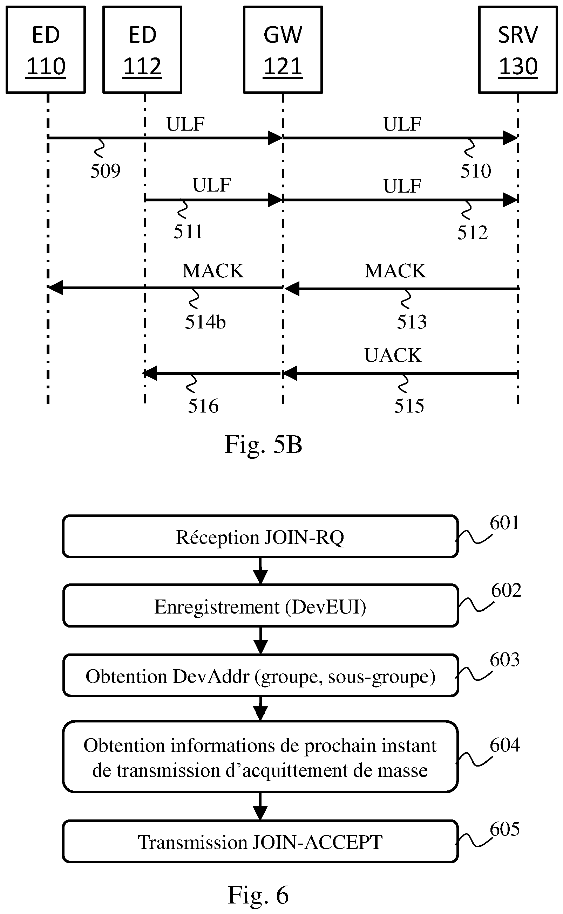

Dans une étape 503, l'équipement serveur SRV 130 envoie, en réponse au message JOIN-RQ du dispositif terminal ED 112, un message JOIN-ACCEPT de confirmation d'enregistrement, qui inclut les informations contenues dans les champs définis à la Fig. 4A. Ainsi, grâce à ce message JOIN-ACCEPT, l'équipement serveur SRV 130 indique au dispositif terminal ED 112 à quel groupe (champ GID) le dispositif terminal ED 112 appartient, et à quel sous-groupe (champ SGID) le dispositif terminal ED 112 appartient au sein dudit groupe. De plus, grâce à ce message JOIN-ACCEPT, l'équipement serveur SRV 130 indique au dispositif terminal ED 112 à quel instant la prochaine transmission d'un message d'acquittement de masse MACK pour ledit groupe est prévue. D'autres informations peuvent optionnellement être incluses dans le message JOIN-ACCEPT, comme détaillé ci-après en relation avec la Fig. 6, et notamment une référence temporelle pour se synchroniser temporellement. Ce message JOIN-ACCEPT correspond préférentiellement au message « join-accept » dans les spécifications LoRaWAN, à l'exception des champs additionnels définis à la Fig. 4A. Ce message JOIN-ACCEPT est transmis à la passerelle de collecte GW 121, sélectionnée par l'équipement serveur SRV 130 pour relayer ledit message JOIN-ACCEPT. La passerelle de collecte GW 121 relaie alors, dans une étape 504, ledit message JOIN-ACCEPT à destination du dispositif terminal ED 112.

Dans une étape 505, le dispositif terminal ED 110 envoie un message JOIN-RQ de demande d'enregistrement auprès de l'équipement serveur SRV 130. Ce message JOIN-RQ est traité de la même manière que le message JOIN-RQ précédemment transmis par le dispositif terminal ED 112, et est relayé à l'équipement serveur SRV 130 par la passerelle de collecte GW 121 dans une étape 506.

Dans une étape 507, l'équipement serveur SRV 130 envoie, en réponse au message JOIN-RQ du dispositif terminal ED 110, un message JOIN-ACCEPT de confirmation d'enregistrement, qui inclut les informations contenues dans les champs définis à la Fig. 4A. Ce message JOIN-ACCEPT est traité de la même manière que le message JOIN-ACCEPT précédemment transmis à destination du dispositif terminal ED 112, et est relayé à destination du dispositif terminal ED 110 par la passerelle de collecte GW 121 dans une étape 508.

De manière illustrative, il est considéré ici que les dispositifs terminaux ED 110 et 112 appartiennent au même groupe, et au sein dudit groupe, au même sous-groupe. De plus, il est considéré ici que l'équipement serveur SRV 130 a envoyé la même valeur de champ WUT aux dispositifs terminaux ED 110 et 112.

Dans une étape 509, le dispositif terminal ED 110 transmet une première trame ascendante ULF (pour « UpLink Frame » en anglais) à destination de l'équipement serveur SRV 130. Cette première trame ascendante ULF est captée au moins par la passerelle de collecte GW 121, qui relaie ladite première trame ascendante ULF vers l'équipement serveur SRV 130 dans une étape 510. Cette première trame ascendante ULF contient des données destinées à être collectées par l'application serveur concernée. Lorsque l'application serveur concernée n'est pas évidente (typiquement lorsque le système de communication n'est pas dédié à une unique application serveur), l'application serveur concernée est identifiée grâce au champ FPORT, tel que défini dans les spécifications LoRaWAN, d'un entête de ladite première trame ascendante ULF.

Dans une étape 511, le dispositif terminal ED 112 transmet une seconde trame ascendante ULF à destination de l'équipement serveur SRV 130. Cette seconde trame ascendante ULF est captée au moins par la passerelle de collecte GW 121, qui relaie ladite seconde trame ascendante ULF vers l'équipement serveur SRV 130 dans une étape 512. Cette seconde trame ascendante ULF contient des données destinées à être collectées par l'application serveur concernée. Lorsque l'application serveur concernée n'est pas évidente (typiquement lorsque le système de communication n'est pas dédié à une unique application serveur), l'application serveur concernée est identifiée grâce au champ FPORT, tel que défini dans les spécifications LoRaWAN, d'un entête de ladite seconde trame ascendante ULF.

Lorsque l'instant de la prochaine transmission d'un message d'acquittement de masse MACK pour le groupe auquel appartiennent les dispositifs terminaux ED 110 et 112 est atteint (moins éventuellement une marge MG compensant la latence réseau entre l'équipement serveur SRV 130 et les passerelles de collecte GW 120, 121, 122, 123), l'équipement serveur SRV 130 détermine si l'équipement serveur SRV 130 a reçu, pendant la période P qui vient de s'écouler, une trame ascendante de chacun des dispositifs terminaux ED appartenant au même sous-groupe que les dispositifs terminaux ED 110 et 112. Chaque application cliente est en effet supposée, en régime nominal, transmettre une trame ascendante par période P à son application serveur correspondante, et en tout cas, pas plus d'une trame ascendante pour une même application serveur par période P. Si tel est le cas, l'équipement serveur SRV 130 acquitte toutes les trames ascendantes émises dans la période P qui vient de s'écouler par les dispositifs terminaux ED appartenant au même sous-groupe que les dispositifs terminaux ED 110 et 112 (donc y compris celles transmises par les dispositifs terminaux ED 110 et 112).

L'équipement serveur SRV 130 prépare alors un message d'acquittement de masse MACK, sous forme d'une trame descendante à diffuser pour le groupe en question. Le bit correspondant à la valeur d'index *k* ∈ [0; 2*^{K}* - 1] représentant le sous-groupe des dispositifs terminaux ED 110 et 112 dans le champ ACK est mis à la première valeur prédéfinie susmentionnée. L'équipement serveur SRV 130 fait de même pour les autres sous-groupes du groupe en question. L'équipement serveur SRV 130 démarre une nouvelle période P, estime à quel instant la prochaine transmission d'acquittement de masse pour ledit groupe va avoir lieu, et complète la trame descendante en conséquence.

Dans une étape 513, l'équipement serveur SRV 130 transmet, à la passerelle de collecte GW 121, le message d'acquittement de masse MACK, sous forme d'une trame descendante que la passerelle de collecte GW 121 diffuse à destination du groupe concerné. Ce message d'acquittement de masse MACK utilise ainsi l'adresse de diffusion définie pour le groupe en question. L'équipement serveur SRV 130 indique à la passerelle de collecte GW 121 à quel moment le message d'acquittement de masse MACK est supposé être transmis. Ce moment correspond à l'instant représenté dans le champ WUT (cf. Fig. 4D).

Etant donné que l'équipement serveur SRV 130 a indiqué dans les messages JOIN-ACCEPT adressés respectivement aux dispositifs terminaux ED 110 et 112 à quel instant était supposée intervenir la prochaine transmission d'un message d'acquittement de masse MACK (cf. champ WUT de la Fig. 4A), les dispositifs terminaux ED 110 et 112 sont aptes à se mettre à l'écoute du médium de communication au moment opportun. Une certaine marge, concernant la plage temporelle d'écoute du médium, peut être prise par les dispositifs terminaux ED 110 et 112 afin de compenser une potentielle dérive d'horloge (« clock drift » en anglais).

Le message d'acquittement de masse MACK est ainsi reçu par le dispositif terminal ED 112 dans une étape 514a et par le dispositif terminal ED 110 dans une étape 514b. Les dispositifs terminaux ED 110 et 112 peuvent ainsi déterminer si leurs trames ascendantes sont acquittées, en regardant la valeur du bit correspondant à la valeur d'index *k* ∈ [0; 2*^{K}* - 1] représentant le sous-groupe des dispositifs terminaux ED 110 et 112 dans le champ ACK dudit message d'acquittement de masse MACK. Les dispositifs terminaux ED 110 et 112 peuvent se synchroniser temporellement, vis-à-vis du réseau, grâce au champ TINF, et peuvent aussi déterminer à quel instant la transmission du prochain message d'acquittement de masse MACK est supposée avoir lieu grâce au champ WUT (cf. Fig. 4D). D'ailleurs, les dispositifs terminaux ED peuvent écouter le médium afin de se resynchroniser et d'obtenir l'instant de réception du prochain message d'acquittement de masse MACK, même en situation où aucun acquittement n'est attendu par lesdits dispositifs terminaux ED.

La **Fig. 5B** illustre schématiquement une variante des échanges de messages de la Fig. 5A, dans laquelle il est considéré que les dispositifs terminaux ED 110 et 112 appartiennent au même groupe, mais au sein dudit groupe, à des sous-groupes distincts. On retrouve sur la Fig. 5B les transmissions des trames ascendantes des étapes 509 à 512. Il est considéré ici que l'équipement serveur SRV 130 a effectivement reçu une trame ascendante de chaque dispositif terminal ED du même sous-groupe que le dispositif terminal ED 110, mais n'a pas reçu de trame ascendante d'au moins un autre dit dispositif terminal ED du même sous-groupe que le dispositif terminal ED 112. Dans ce cas, l'acquittement des trames ascendantes émises par le sous-groupe auquel appartient le dispositif terminal ED 112 ne peut pas se faire par le biais de l'acquittement de masse MACK.

L'acquittement de masse MACK sert toutefois au dispositif terminal ED 112 à identifier que sa trame ascendante devrait être acquittée en mode point-à-point, si ladite trame ascendante a été effectivement reçue par l'équipement serveur SRV 130. De plus, l'acquittement de masse MACK sert au dispositif terminal ED 112 à déterminer à quel instant la transmission du prochain message d'acquittement de masse MACK est supposée avoir lieu grâce au champ WUT et, au besoin, à se synchroniser temporellement grâce au champ TINF.

L'équipement serveur SRV 130 acquitte les trames ascendantes reçues des dispositifs terminaux ED du sous-groupe auquel appartient le dispositif terminal ED 112, en utilisant des messages d'acquittement individuel UACK transmis en mode point-à-point. Ainsi, l'équipement serveur SRV 130 envoie à la passerelle de collecte GW 121, dans une étape 515, le message d'acquittement individuel UACK destiné au dispositif terminal ED 112. La passerelle de collecte GW 121 relaie, dans une étape 516, le message d'acquittement individuel UACK adressé au dispositif terminal ED 112.

Dans le cas où le dispositif terminal ED 112 ne reçoit pas de message d'acquittement individuel UACK avant l'expiration d'une période P_UACK prédéfinie après la réception du message d'acquittement de masse MACK, le dispositif terminal ED 112 considère que sa trame ascendante n'a pas été reçue par l'équipement serveur SRV 130 et le dispositif terminal ED 112 retransmet alors ultérieurement les données qui étaient contenues dans la trame ascendante qui a été perdue.

Dans un mode de réalisation particulier (non illustré sur les Figs. 5A et 5B), l'équipement serveur SRV 130 effectue plusieurs transmissions consécutives du message d'acquittement de masse MACK, avec un laps de temps de durée prédéfinie entre elles (typiquement de 4 secondes). Cela permet de contrer des décalages d'horloge qui seraient survenus dans les dispositifs terminaux ED concernés et/ou de contrer des interférences qui affecteraient la réception dudit message d'acquittement de masse MACK.

La **Fig. 6** illustre schématiquement un algorithme d'enregistrement d'un dispositif terminal ED dans le système de communication de la Fig. 1, dans un mode de réalisation particulier de l'invention.

Dans une étape 601, l'équipement serveur SRV 130 reçoit un message JOIN-RQ. Le message JOIN-RQ a été émis par le dispositif terminal ED en question et a été relayé par au moins une dite passerelle de collecte GW 120, 121, 122, 123. Le message JOIN-RQ inclut l'identifiant unique, DevEUI, du dispositif terminal ED en question. Le message JOIN-RQ inclut préférentiellement en outre un identifiant unique, JoinEUI, de l'application serveur qui correspond à l'application client dudit dispositif terminal ED ou des applications serveur qui correspondent aux applications client dudit dispositif terminal ED.

Dans une étape 602, l'équipement serveur SRV 130 effectue une vérification que le dispositif terminal ED en question (e.g. authentification à partir d'informations de sécurité renseignées dans le message JOIN-RQ) est autorisé à rejoindre le système de communication. Considérant une vérification positive, l'équipement serveur SRV 130 enregistre le dispositif terminal ED en question dans le système de communication. L'équipement serveur SRV 130 sauvegarde en mémoire l'identifiant unique, DevEUI, du dispositif terminal ED en question, et préférentiellement l'identifiant unique, JoinEUI, de la ou des applications serveur concernées.

Dans une étape 603, l'équipement serveur SRV 130 obtient l'adresse, DevAddr, à utiliser comme adresse source par le dispositif terminal ED en question pour transmettre ultérieurement des trames ascendantes à destination de l'équipement serveur SRV 130, et qui est ultérieurement utilisée comme adresse destination par l'équipement serveur SRV 130 pour contacter le dispositif terminal ED en question en mode point-à-point. L'adresse en question a une portée limitée au système de communication, et est construite comme schématiquement représenté sur la Fig. 4B. En d'autres termes, une partie des bits de cette adresse attribuée audit dispositif terminal ED en question représente le groupe auquel ledit dispositif terminal ED appartient, ainsi que le sous-groupe auquel ledit dispositif terminal ED appartient, les bits restants permettant de distinguer ledit dispositif terminal ED en question de tout autre dispositif terminal ED au sein du même sous-groupe.

Dans une étape 604, l'équipement serveur SRV 130 obtient une information représentant l'instant auquel le prochain acquittement de masse MACK est supposé être transmis pour le groupe auquel ledit dispositif terminal ED appartient.

Dans une étape 605, l'équipement serveur SRV 130 transmet un message JOIN-ACCEPT qui inclut le champ DA, DevAddr, notifiant de l'adresse obtenue à l'étape 603. Le message JOIN-ACCEPT inclut une information représentant l'instant auquel le prochain acquittement de masse MACK est supposé être transmis pour le groupe auquel ledit dispositif terminal ED appartient, telle qu'obtenue à l'étape 604. Ainsi, grâce à une connaissance du format de construction de l'adresse DevAddr (cf. Fig. 4B), ledit dispositif terminal ED est apte à déterminer à quel groupe ledit dispositif terminal ED appartient (champ GID), ainsi qu'à quel sous-groupe ledit dispositif terminal ED appartient (champ SGID), ce qui lui identifie le bit d'index *k* ∈ [0; 2*^{K}* - 1] qui le concerne dans le champ ACK des futures transmissions de messages d'acquittement de masse MACK pour ledit groupe.

Le message JOIN-ACCEPT inclut préférentiellement d'une part (cf. champ TINF de la Fig. 4A) une information de référence temporelle permettant de synchroniser les terminaux ED au réseau, et d'autre part (cf. champ WUT de la Fig. 4A) une information représentant l'instant de transmission du prochain message d'acquittement de masse MACK. A noter que les dispositifs terminaux ED 110, 111, 112 peuvent se synchroniser temporellement par un autre biais (e.g. en s'appuyant sur des balises transmises par les passerelles de collecte GW 120, 121, 122, 123).

Dans un mode de réalisation particulier, le message JOIN-ACCEPT inclut les valeurs des paramètres K et M utilisés pour définir respectivement la quantité maximale de sous-groupes par groupe et la quantité maximale de dispositifs terminaux ED par groupe dans le système de communication. Les valeurs des paramètres K et M peuvent toutefois être prédéfinies et programmées à l'installation ou en usine.

Dans un mode de réalisation particulier, les messages d'acquittement de masse MACK sont chiffrés et le message JOIN-ACCEPT inclut la clef de sécurité AppKey_B susmentionnée (cf. champ AK de la Fig. 4A). Cette clef de sécurité AppKey_B est ainsi utilisée par l'équipement serveur SRV 130 pour chiffrer les trames descendantes diffusées pour le groupe concerné (cf. champ GID de la Fig. 4B) et est donc utilisée par les dispositifs terminaux ED du groupe en question pour déchiffrer lesdites trames descendantes. En variante, cette clef de sécurité AppKey_B est programmée en usine dans des mémoires respectives des dispositifs de communication concernés, ou dérivée d'informations programmées en usine dans les mémoires respectives des dispositifs de communication concernés.

Préférentiellement, le message JOIN-ACCEPT inclut tous les champs définis à la Fig. 4A.

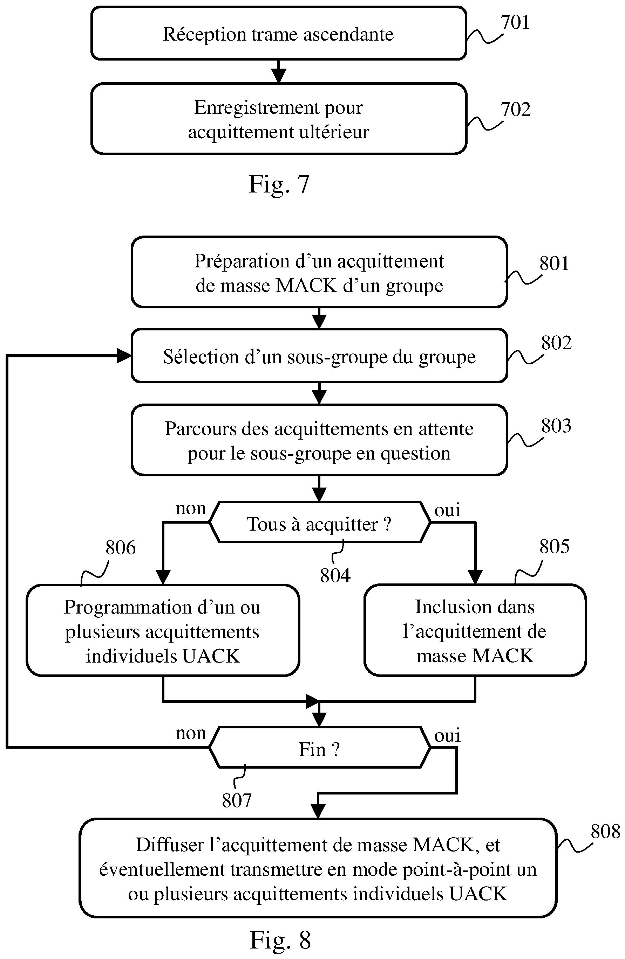

La **Fig. 7** illustre schématiquement un algorithme de réception de trames ascendantes ULF dans le système de communication, dans un mode de réalisation particulier de l'invention.

Dans une étape 701, l'équipement serveur SRV 130 reçoit une trame ascendante ULF en provenance d'un dit dispositif terminal ED, que l'équipement serveur SRV 130 est supposé acquitter.

Dans une étape 702, l'équipement serveur SRV 130 enregistre en mémoire une information indiquant devoir ultérieurement acquitter la trame ascendante ULF reçue à l'étape 701. L'équipement serveur SRV 130 enregistre en mémoire au moins l'adresse source de la trame ascendante ULF, à savoir l'adresse DevAddr susmentionnée. L'équipement serveur SRV 130 décide alors comment acquitter ladite trame ascendante ULF, à l'issue de la période P en cours entre deux messages d'acquittement de masse MACK pour le groupe identifié par l'adresse source de la trame ascendante ULF.

La **Fig. 8** illustre schématiquement, dans un mode de réalisation particulier de l'invention, un algorithme d'acquittement de trames ascendantes ULF reçues dans le cadre de l'exécution de l'algorithme de la Fig. 7. L'algorithme de la Fig. 8 est appliqué indépendamment pour chaque groupe défini dans le système de communication.

Dans une étape 801, l'équipement serveur SRV 130 détecte la fin de la période P (éventuellement moins la marge MG susmentionnée) depuis le dernier envoi d'un message d'acquittement de masse pour le groupe en question. L'équipement serveur SRV 130 prépare alors un nouveau message d'acquittement de masse MACK pour ledit groupe.

Dans une étape 802, l'équipement serveur SRV 130 sélectionne un sous-groupe dans ledit groupe.

Dans une étape 803, l'équipement serveur SRV 130 parcourt les acquittements en attente pour le sous-groupe en question, afin de déterminer par quels dispositifs terminaux ED ont été transmises les trames ascendantes ULF en attente d'acquittement.

Dans une étape 804, l'équipement serveur SRV 130 vérifie avoir reçu, pendant ladite période P, une trame ascendante ULF à acquitter pour chacun des dispositifs terminaux ED qui appartiennent au sous-groupe sélectionné à l'étape 802. Si tel est le cas, une étape 805 est effectuée ; sinon, une étape 806 est effectuée.

Dans l'étape 805, l'équipement serveur SRV 130 inclut dans le message d'acquittement de masse MACK en cours de préparation une information indiquant que toutes les trames ascendantes transmises pendant la période P qui vient de s'écouler par les dispositifs terminaux ED du sous-groupe sélectionné à l'étape 802 sont acquittées. Plus précisément, l'équipement serveur SRV 130 met à la première valeur prédéfinie susmentionnée le bit dans le champ ACK (cf. Fig. 4D) correspondant à la valeur d'index *k* ∈ [0; 2*^{K}* - 1] représentant le sous-groupe sélectionné à l'étape 802. Puis, l'étape 807 est effectuée.

Dans l'étape 806, l'équipement serveur SRV 130 programme la transmission d'un ou plusieurs messages d'acquittement individuel UACK, i.e. à transmettre en mode point-à-point. Plus précisément, l'équipement serveur SRV 130 programme la transmission d'un message d'acquittement individuel UACK pour chaque dispositif terminal ED du sous-groupe sélectionné à l'étape 802 pour lequel un acquittement est en attente. L'équipement serveur SRV 130 met à la seconde valeur prédéfinie susmentionnée le bit dans le champ ACK (cf. Fig. 4D) correspondant à la valeur d'index *k* ∈ [0; 2*^{K}* - 1] représentant le sous-groupe sélectionné à l'étape 802. Puis, une étape 807 est effectuée.

Dans l'étape 807, l'équipement serveur SRV 130 vérifie si tous les sous-groupes du groupe en question ont été passés en revue. Si tel est le cas, une étape 808 est effectuée ; sinon, l'étape 802 est répétée, en sélectionnant un autre sous-groupe dudit groupe qui n'a pas encore été passé en revue.

Dans l'étape 808, l'équipement serveur SRV 130 transmet le message d'acquittement de masse MACK. Comme déjà indiqué, l'équipement serveur SRV 130 utilise l'adresse de diffusion qui correspond au groupe en question (cf. Fig. 4C). L'équipement serveur SRV 130 peut en outre chiffrer le message d'acquittement de masse MACK grâce à la clef de sécurité AppKey_B susmentionnée. L'équipement serveur SRV 130 sélectionne une dite passerelle de collecte GW 120, 121, 122, 123, et lui transmet le message d'acquittement de masse MACK, afin que la passerelle de collecte GW 120, 121, 122, 123 sélectionnée diffuse ledit message d'acquittement de masse MACK à destination des dispositifs terminaux ED du groupe en question. Eventuellement, l'équipement serveur SRV 130 transmet un ou plusieurs acquittements individuels UACK, comme programmé dans les diverses potentielles itérations de l'étape 806.

## Revendications

1. Procédé d'acquittement de trames ascendantes transmises depuis des dispositifs terminaux (110, 111, 112) vers un équipement serveur (130) dans un système de communication, le procédé étant implémenté par l'équipement serveur (130), le procédé comportant les étapes suivantes pour chaque dit dispositif terminal (110, 111, 112) :
- recevoir (601) dudit dispositif terminal (110, 111, 112) un message de demande d'enregistrement auprès de l'équipement serveur (130) ;
- affecter ledit dispositif terminal (110, 111, 112) à un groupe, et au sein dudit groupe, à un sous-groupe ;
- obtenir (603) une adresse à utiliser par ledit dispositif terminal (110, 111, 112) pour communiquer ultérieurement dans le système de communication, une partie de ladite adresse identifiant ledit groupe, une autre partie de ladite adresse identifiant ledit sous-groupe et encore une autre partie de ladite adresse identifiant ledit dispositif terminal (110, 111, 112) au sein dudit sous-groupe ;
- transmettre (605) audit dispositif terminal un message de confirmation d'enregistrement, incluant l'adresse obtenue, ainsi qu'une information représentant un instant estimé de prochaine transmission d'acquittement, dit acquittement de masse, commun audit groupe ; et le procédé comportant en outre les étapes suivantes, pour chaque groupe :
- vérifier (804), pour chaque sous-groupe dudit groupe, si une trame ascendante a été reçue de chaque dispositif terminal (110, 111, 112) affecté audit sous-groupe depuis la transmission du précédent acquittement de masse pour ledit groupe ;
- construire un acquittement de masse dans lequel chaque sous-groupe dudit groupe est associé à une même information acquittant lesdites trames ascendantes reçues de tous les dispositifs terminaux (110, 111, 112) dudit sous-groupe en cas de vérification positive, et à une même information n'acquittant aucune trame ascendante reçue de dispositifs terminaux (110, 111, 112) dudit sous-groupe en cas de vérification négative, l'acquittement de masse incluant en outre une information représentant un instant estimé de prochaine transmission d'acquittement de masse pour ledit groupe ; et
- diffuser (808) l'acquittement de masse, et acquitter en mode point-à-point les trames ascendantes reçues qui n'ont pas été acquittées par l'acquittement de masse.

2. Procédé selon la revendication 1, dans lequel chaque sous-groupe est associé à un bit dans un champ de l'acquittement de masse, ledit bit est mis à une première valeur prédéfinie pour acquitter les trames ascendantes de tous les dispositifs terminaux (110, 111, 112) du sous-groupe associé et ledit bit est mis à une seconde valeur prédéfinie pour acquitter aucune des trames ascendantes des dispositifs terminaux (110, 111, 112) du sous-groupe associé.

3. Procédé selon l'une des revendications 1 et 2, dans lequel chaque message de confirmation d'enregistrement inclut en outre une information de référence temporelle permettant une synchronisation de mise à l'heure du dispositif terminal (110, 111, 112) en question, et chaque acquittement de masse inclut en outre aussi une telle information de référence temporelle.

4. Procédé selon la revendication 3, dans lequel l'information représentant un instant estimé de prochaine transmission d'acquittement de masse pour un dit groupe est exprimée de manière relative par rapport à ladite référence temporelle.

5. Procédé selon l'une quelconque des revendications 1 à 4, dans lequel chaque acquittement de masse de chaque groupe est diffusé en utilisant une adresse de diffusion construite sur la base des adresses des dispositifs terminaux (110, 111, 112) dudit groupe, en remplaçant par une valeur réservée la partie de ladite adresse servant à identifier un sous-groupe et la partie de ladite adresse servant à identifier un dit dispositif terminal au sein d'un dit sous-groupe.

6. Procédé selon l'une quelconque des revendications 1 à 5, dans lequel chaque message de confirmation d'enregistrement inclut en outre une valeur de paramètre K définissant, dans l'adresse du dispositif terminal (110, 111, 112) auquel le message de confirmation d'enregistrement est adressé, la largeur de représentation en nombre de bits des sous-groupes du groupe auquel ledit dispositif terminal (110, 111, 112) est affecté.

7. Procédé selon la revendication 6, dans lequel chaque message de confirmation d'enregistrement inclut en outre une valeur de paramètre M de telle sorte que la différence M-K définit, dans l'adresse du dispositif terminal (110, 111, 112) auquel le message de confirmation d'enregistrement est adressé, la largeur de représentation en nombre de bits des identifiants des dispositifs terminaux (110, 111, 112) du sous-groupe concerné.

8. Procédé selon la revendication 6, dans lequel chaque identifiant de groupe fournit implicitement une valeur de paramètre M de telle sorte que la différence M-K définit, dans l'adresse du dispositif terminal (110, 111, 112) auquel le message de confirmation d'enregistrement est adressé, la largeur de représentation en nombre de bits des identifiants des dispositifs terminaux (110, 111, 112) du sous-groupe concerné, la valeur du paramètre M étant alors obtenue de la manière suivante :
- parcourir consécutivement les bits de poids fort pour détecter à quel index se trouve le premier bit en séquence à avoir telle ou telle valeur en partant du bit de poids le plus fort ; et
- utiliser une table, ou une formule, de conversion prédéfinie connue dudit dispositif terminal (110, 111, 112) et de l'équipement serveur (130) entre cet index et la valeur du paramètre M.

9. Procédé de gestion d'acquittement de trames ascendantes transmises depuis des dispositifs terminaux (110, 111, 112) vers un équipement serveur (130) dans un système de communication, le procédé étant implémenté par chaque dispositif terminal (110, 111, 112), le procédé comportant les étapes suivantes :
- transmettre à l'équipement serveur (130) un message de demande d'enregistrement auprès de l'équipement serveur (130) ;
- recevoir de l'équipement serveur (130) un message de confirmation d'enregistrement incluant une adresse à utiliser par ledit dispositif terminal (110, 111, 112) pour communiquer ultérieurement dans le système de communication, une partie de ladite adresse identifiant un groupe auquel ledit dispositif terminal (110, 111, 112) est affecté, une autre partie de ladite adresse identifiant un sous-groupe auquel ledit dispositif terminal (110, 111, 112) est affecté au sein dudit groupe et encore une autre partie de ladite adresse identifiant ledit dispositif terminal (110, 111, 112) au sein dudit sous-groupe, le message de confirmation d'enregistrement incluant en outre une information représentant un instant estimé de prochaine transmission d'acquittement, dit acquittement de masse, commun audit groupe ;
- transmettre une trame ascendante à l'équipement serveur (130) ;
- recevoir, par diffusion, un acquittement de masse dans lequel chaque sous-groupe dudit groupe est associé à une même information acquittant ou pas lesdites trames ascendantes reçues de tous les dispositifs terminaux (110, 111, 112) dudit sous-groupe, l'acquittement de masse incluant en outre une information représentant un instant estimé de prochaine transmission d'acquittement de masse pour ledit groupe ; et
- recevoir un acquittement en mode point-à-point lorsque la trame ascendante n'a pas été acquittée par l'acquittement de masse.

10. Produit programme d'ordinateur comportant des instructions entraînant l'exécution du procédé selon l'une quelconque des revendications 1 à 8 ou du procédé selon la revendication 9, lorsque lesdites instructions sont exécutées par un processeur.

11. Support de stockage d'informations stockant un programme d'ordinateur selon la revendication 10.

12. Equipement serveur (130) configuré pour effectuer un acquittement de trames ascendantes transmises depuis des dispositifs terminaux (110, 111, 112) vers l'équipement serveur (130) dans un système de communication, l'équipement serveur (130) implémentant pour chaque dit dispositif terminal (110, 111, 112) :
- des moyens pour recevoir dudit dispositif terminal (110, 111, 112) un message de demande d'enregistrement auprès de l'équipement serveur (130) ;
- des moyens pour affecter ledit dispositif terminal (110, 111, 112) à un groupe, et au sein dudit groupe, à un sous-groupe ;
- des moyens pour obtenir une adresse à utiliser par ledit dispositif terminal (110, 111, 112) pour communiquer ultérieurement dans le système de communication, une partie de ladite adresse identifiant ledit groupe, une autre partie de ladite adresse identifiant ledit sous-groupe et encore une autre partie de ladite adresse identifiant ledit dispositif terminal (110, 111, 112) au sein dudit sous-groupe ;
- des moyens pour transmettre audit dispositif terminal (110, 111, 112) un message de confirmation d'enregistrement, incluant l'adresse obtenue, ainsi qu'une information représentant un instant estimé de prochaine transmission d'acquittement, dit acquittement de masse, commun audit groupe ;
et l'équipement serveur (130) implémentant pour chaque groupe :
- des moyens pour vérifier (804), pour chaque sous-groupe dudit groupe, si une trame ascendante a été reçue de chaque dispositif terminal (110, 111, 112) affecté audit sous-groupe depuis la transmission du précédent acquittement de masse pour ledit groupe ;
- des moyens pour construire un acquittement de masse dans lequel chaque sous-groupe dudit groupe est associé à une même information acquittant lesdites trames ascendantes reçues de tous les dispositifs terminaux (110, 111, 112) dudit sous-groupe en cas de vérification positive, et à une même information n'acquittant aucune trame ascendante reçue de dispositifs terminaux (110, 111, 112) dudit sous-groupe en cas de vérification négative, l'acquittement de masse incluant en outre une information représentant un instant estimé de prochaine transmission d'acquittement de masse pour ledit groupe ; et
- des moyens pour diffuser (808) l'acquittement de masse, et acquitter en mode point-à-point les trames ascendantes reçues qui n'ont pas été acquittées par l'acquittement de masse.

13. Dispositif terminal (110) configuré pour effectuer une gestion d'acquittement de trames ascendantes transmises vers un équipement serveur (130) dans un système de communication comportant d'autres dispositifs terminaux (110, 111, 112), ledit dispositif terminal (110) implémentant :
- des moyens pour transmettre à l'équipement serveur (130) un message de demande d'enregistrement auprès de l'équipement serveur (130) ;
- des moyens pour recevoir de l'équipement serveur (130) un message de confirmation d'enregistrement incluant une adresse à utiliser par ledit dispositif terminal (110) pour communiquer ultérieurement dans le système de communication, une partie de ladite adresse identifiant un groupe auquel ledit dispositif terminal (110) est affecté, une autre partie de ladite adresse identifiant un sous-groupe auquel ledit dispositif terminal (110) est affecté au sein dudit groupe et encore une autre partie de ladite adresse identifiant ledit dispositif terminal (110) au sein dudit sous-groupe, le message de confirmation d'enregistrement incluant en outre une information représentant un instant estimé de prochaine transmission d'acquittement, dit acquittement de masse, commun audit groupe ;
- des moyens pour transmettre une trame ascendante à l'équipement serveur (130) ;
- des moyens pour recevoir, par diffusion, un acquittement de masse dans lequel chaque sous-groupe dudit groupe est associé à une même information acquittant ou pas lesdites trames ascendantes reçues de tous les dispositifs terminaux (110, 111, 112) dudit sous-groupe, l'acquittement de masse incluant en outre une information représentant un instant estimé de prochaine transmission d'acquittement de masse pour ledit groupe ; et
- des moyens pour recevoir un acquittement en mode point-à-point lorsque la trame ascendante n'a pas été acquittée par l'acquittement de masse.

## Patentansprüche

1. Quittierungsverfahren aufsteigender Rahmen, die von Endvorrichtungen (110, 111, 112) zu einer Serverausrüstung (130) in einem Kommunikationssystem übertragen werden, wobei das Verfahren von der Serverausrüstung (130) eingesetzt wird, wobei das Verfahren die folgenden Schritte für jede Endvorrichtung (110, 111, 112) aufweist:
- Empfangen (601) von der Endvorrichtung (110, 111, 112) einer Registrierungsantragsnachricht bei der Serverausrüstung (130);
- Zuweisen der Endvorrichtung (110, 111, 112) zu einer Gruppe und innerhalb der Gruppe zu einer Untergruppe;
- Erhalt (603) einer von der Endvorrichtung (110, 111, 112) zu verwendenden Adresse, um später im Kommunikationssystem zu kommunizieren, wobei ein Teil der Adresse die Gruppe kennzeichnet, ein anderer Teil der Adresse die Untergruppe kennzeichnet, und noch ein anderer Teil der Adresse die Endvorrichtung (110, 111, 112) innerhalb der Untergruppe kennzeichnet;
- Übertragen (605) an die Endvorrichtung einer die erhaltene Adresse umfassenden Registrierungsbestätigungsnachricht sowie einer Information, die einen geschätzten Zeitpunkt der nächsten Quittierungsübertragung, Massequittierung genannt, darstellt, der der Gruppe gemeinsam ist;
und das Verfahren außerdem die folgenden Schritte für jede Gruppe aufweist:
- Überprüfen (804), für jede Untergruppe der Gruppe, ob ein aufsteigender Rahmen von jeder der Untergruppe zugewiesenen Endvorrichtung (110, 111, 112) seit der Übertragung der vorhergehenden Massequittierung für die Gruppe empfangen wurde;
- Konstruieren einer Massequittierung, wobei jede Untergruppe der Gruppe einer gleichen Information, die die von allen Endvorrichtungen (110, 111, 112) der Untergruppe empfangenen aufsteigenden Rahmen im Fall einer positiven Überprüfung quittiert, und einer gleichen Information zugeordnet ist, die keinen von Endvorrichtungen (110, 111, 112) der Untergruppe empfangenen aufsteigenden Rahmen im Fall einer negativen Überprüfung quittiert, wobei die Massequittierung außerdem eine Information umfasst, die einen geschätzten Zeitpunkt einer nächsten Übertragung einer Massequittierung für die Gruppe darstellt; und
- Verbreiten (808) der Massequittierung und Quittieren im Punkt-zu-Punkt-Modus der empfangenen aufsteigenden Rahmen, die nicht von der Massequittierung quittiert wurden.

2. Verfahren nach Anspruch 1, wobei jede Untergruppe einem Bit in einem Feld der Massequittierung zugeordnet ist, das Bit auf einen ersten vordefinierten Wert gesetzt wird, um die aufsteigenden Rahmen aller Endvorrichtungen (110, 111, 112) der zugeordneten Untergruppe zu quittieren, und das Bit auf einen zweiten vordefinierten Wert gesetzt wird, um keinen der aufsteigenden Rahmen der Endvorrichtungen (110, 111, 112) der zugeordneten Untergruppe zu quittieren.

3. Verfahren nach einem der Ansprüche 1 und 2, wobei jede Registrierungsbestätigungsnachricht außerdem eine Zeitreferenzinformation umfasst, die eine Synchronisation der Zeiteinstellung der fraglichen Endvorrichtung (110, 111, 112) ermöglicht, und jede Massequittierung außerdem auch eine solche Zeitreferenzinformation umfasst.

4. Verfahren nach Anspruch 3, wobei die einen geschätzten Zeitpunkt der nächsten Massequittierungsübertragung für eine Gruppe darstellende Information relativ bezüglich der Zeitreferenz ausgedrückt wird.

5. Verfahren nach einem der Ansprüche 1 bis 4, wobei jede Massequittierung jeder Gruppe unter Verwendung einer Verbreitungsadresse verbreitet wird, die auf der Basis der Adressen der Endvorrichtungen (110, 111, 112) der Gruppe konstruiert wird, indem der Teil der Adresse, der dazu dient, eine Untergruppe zu kennzeichnen, und der Teil der Adresse, der dazu dient, eine Endvorrichtung innerhalb einer Untergruppe zu kennzeichnen, durch einen reservierten Wert ersetzt werden.

6. Verfahren nach einem der Ansprüche 1 bis 5, wobei jede Registrierungsbestätigungsnachricht außerdem einen Parameterwert K umfasst, der in der Adresse der Endvorrichtung (110, 111, 112), an die die Registrierungsbestätigungsnachricht adressiert ist, die Darstellungsbreite in Anzahl von Bits der Untergruppen der Gruppe definiert, der die Endvorrichtung (110, 111, 112) zugewiesen ist.

7. Verfahren nach Anspruch 6, wobei jede Registrierungsbestätigungsnachricht außerdem einen Parameterwert M umfasst, derart, dass die Differenz M-K in der Adresse der Endvorrichtung (110, 111, 112), an die die Registrierungsbestätigungsnachricht adressiert ist, die Darstellungsbreite in Anzahl von Bits der Kennungen der Endvorrichtungen (110, 111, 112) der betroffenen Untergruppe definiert.

8. Verfahren nach Anspruch 6, wobei jede Gruppenkennung implizit einen Parameterwert M liefert, derart, dass die Differenz M-K in der Adresse der Endvorrichtung (110, 111, 112), an die die Registrierungsbestätigungsnachricht adressiert ist, die Darstellungsbreite in Anzahl von Bits der Kennungen der Endvorrichtungen (110, 111, 112) der betroffenen Untergruppe definiert, wobei der Wert des Parameters M dann folgendermaßen erhalten wird:
- aufeinanderfolgendes Durchlaufen der hochwertigen Bits, um zu erfassen, auf welchem Index sich das erste Bit in Folge befindet, das diesen oder jenen Wert hat, ausgehend vom höchstwertigen Bit; und
- Verwenden einer der Endvorrichtung (110, 111, 112) und der Serverausrüstung (130) bekannten vordefinierten Konvertierungstabelle oder -formel zwischen diesem Index und dem Wert des Parameters M.

9. Verfahren zur Verwaltung der Quittierung von aufsteigenden Rahmen, die von Endvorrichtungen (110, 111, 112) zu einer Serverausrüstung (130) in einem Kommunikationssystem übertragen werden, wobei das Verfahren von jeder Endvorrichtung (110, 111, 112) eingesetzt wird, wobei das Verfahren die folgenden Schritte aufweist:
- Übertragen an die Serverausrüstung (130) einer Registrierungsantragsnachricht bei der Serverausrüstung (130);
- Empfangen von der Serverausrüstung (130) einer Registrierungsbestätigungsnachricht, die eine Adresse umfasst, die von der Endvorrichtung (110, 111, 112) zur späteren Kommunikation im Kommunikationssystem zu verwenden ist, wobei ein Teil der Adresse eine Gruppe kennzeichnet, der die Endvorrichtung (110, 111, 112) zugewiesen ist, ein anderer Teil der Adresse eine Untergruppe kennzeichnet, der die Endvorrichtung (110, 111, 112) innerhalb der Gruppe zugewiesen ist, und noch ein anderer Teil der Adresse die Endvorrichtung (110, 111, 112) innerhalb der Untergruppe kennzeichnet, wobei die Registrierungsbestätigungsnachricht außerdem eine einen geschätzten Zeitpunkt der nächsten Quittierungsübertragung, Massequittierung genannt, der der Gruppe gemeinsam ist, darstellende Information umfasst;
- Übertragen eines aufsteigenden Rahmens an die Serverausrüstung (130);
- Empfangen, durch Verbreitung, einer Massequittierung, wobei jede Untergruppe der Gruppe einer gleichen Information zugeordnet ist, die die von allen Endvorrichtungen (110, 111, 112) der Untergruppe empfangenen aufsteigenden Rahmen quittiert oder nicht, wobei die Massequittierung außerdem eine Information umfasst, die einen geschätzten Zeitpunkt der nächsten Massequittierungsübertragung für die Gruppe darstellt; und
- Empfangen einer Quittierung im Punkt-zu-Punkt-Modus, wenn der aufsteigende Rahmen nicht von der Massequittierung quittiert wurde.

10. Computerprogrammprodukt, das Anweisungen aufweist, die die Ausführung des Verfahrens nach einem der Ansprüche 1 bis 8 oder des Verfahren nach Anspruch 9 verursachen, wenn die Anweisungen von einem Prozessor ausgeführt werden.

11. Informationsspeicherträger, der ein Computerprogramm nach Anspruch 10 speichert.

12. Serverausrüstung (130), die konfiguriert ist, eine Quittierung aufsteigender Rahmen auszuführen, die von Endvorrichtungen (110, 111, 112) zur Serverausrüstung (130) in einem Kommunikationssystem übertragen werden, wobei die Serverausrüstung (130) für jede Endvorrichtung (110, 111, 112) einsetzt:
- Einrichtungen zum Empfang einer Registrierungsantragsnachricht bei der Serverausrüstung (130) von der Endvorrichtung (110, 111, 112);
- Einrichtungen zur Zuweisung der Endvorrichtung (110, 111, 112) zu einer Gruppe, und innerhalb der Gruppe zu einer Untergruppe;
- Einrichtungen zum Erhalt einer von der Endvorrichtung (110, 111, 112) zu verwendenden Adresse, um später im Kommunikationssystem zu kommunizieren, wobei ein Teil der Adresse die Gruppe kennzeichnet, ein anderer Teil der Adresse die Untergruppe kennzeichnet, und noch ein anderer Teil der Adresse die Endvorrichtung (110, 111, 112) innerhalb der Untergruppe kennzeichnet;
- Einrichtungen zur Übertragung an die Endvorrichtung (110, 111, 112) einer die erhaltene Adresse umfassenden Registrierungsbestätigungsnachricht sowie einer Information, die einen geschätzten Zeitpunkt der nächsten Quittierungsübertragung, Massequittierung genannt, darstellt, der der Gruppe gemeinsam ist;
und die Serverausrüstung (130) für jede Gruppe einsetzt:
- Einrichtungen zur Überprüfung (804), für jede Untergruppe der Gruppe, ob ein aufsteigender Rahmen von jeder der Untergruppe zugewiesenen Endvorrichtung (110, 111, 112) seit der Übertragung der vorhergehenden Massequittierung für die Gruppe empfangen wurde;
- Einrichtungen zur Konstruktion einer Massequittierung, wobei jede Untergruppe der Gruppe einer gleichen Information, die die von allen Endvorrichtungen (110, 111, 112) der Untergruppe empfangenen aufsteigenden Rahmen im Fall einer positiven Überprüfung quittiert, und einer gleichen Information zugeordnet ist, die keinen von Endvorrichtungen (110, 111, 112) der Untergruppe empfangenen aufsteigenden Rahmen im Fall einer negativen Überprüfung quittiert, wobei die Massequittierung außerdem eine Information umfasst, die einen geschätzten Zeitpunkt der nächsten Massequittierungsübertragung für die Gruppe darstellt; und
- Einrichtungen zur Verbreitung (808) der Massequittierung, und zur Quittierung im Punkt-zu-Punkt-Modus der empfangenen aufsteigenden Rahmen, die nicht von der Massequittierung quittiert wurden.

13. Endvorrichtung (110), die konfiguriert ist, eine Quittierungsverwaltung aufsteigender Rahmen auszuführen, die zu einer Serverausrüstung (130) in einem Kommunikationssystem übertragen werden, das andere Endvorrichtungen (110, 111, 112) aufweist, wobei die Endvorrichtung (110) einsetzt:
- Einrichtungen zur Übertragung an die Serverausrüstung (130) einer Registrierungsantragsnachricht bei der Serverausrüstung (130);
- Einrichtungen zum Empfang von der Serverausrüstung (130) einer Registrierungsbestätigungsnachricht, die eine Adresse umfasst, die von der Endvorrichtung (110) zu verwenden ist, um später im Kommunikationssystem zu kommunizieren, wobei ein Teil der Adresse eine Gruppe kennzeichnet, der die Endvorrichtung (110) zugewiesen ist, ein anderer Teil der Adresse eine Untergruppe kennzeichnet, der die Endvorrichtung (110) innerhalb der Gruppe zugewiesen ist, und noch ein anderer Teil der Adresse die Endvorrichtung (110) innerhalb der Untergruppe kennzeichnet, wobei die Registrierungsbestätigungsnachricht außerdem eine Information umfasst, die einen geschätzten Zeitpunkt der nächsten Quittierungsübertragung, Massequittierung genannt, darstellt, der der Gruppe gemeinsam ist;
- Einrichtungen zur Übertragung eines aufsteigenden Rahmens zur Serverausrüstung (130);
- Einrichtungen zum Empfang, durch Verbreitung, einer Massequittierung, wobei jede Untergruppe der Gruppe einer gleichen Information zugeordnet ist, die die von allen Endvorrichtungen (110, 111, 112) der Untergruppe empfangenen aufsteigenden Rahmen quittiert oder nicht, wobei die Massequittierung außerdem eine Information umfasst, die einen geschätzten Zeitpunkt der nächsten Massequittierungsübertragung für die Gruppe darstellt; und
- Einrichtungen zum Empfang einer Quittierung im Punkt-zu-Punkt-Modus, wenn der aufsteigende Rahmen nicht von der Massequittierung quittiert wurde.

## Claims

1. Method for acknowledging uplink frames transmitted from end devices (110, 111, 112) to server equipment (130) in a communication system, the method being implemented by the server equipment (130), the method comprising the following steps for each said end device (110, 111, 112):
- receiving (601) from said end device (110, 111, 112) a message requesting registration with the server equipment (130);
- allocating said end device (110, 111, 112) to a group and, in said group, to a subgroup;
- obtaining (603) an address to be used by said end device (110, 111, 112) for subsequently communicating, in the communication system, part of said address identifying said group, another part of said address identifying said subgroup and yet another part of said address identifying said end device (110, 111, 112) in said subgroup;
- transmitting (605) to said end device a registration-confirmation message, including the address obtained, as well as information representing an estimated instant of the next transmission of acknowledgement, referred to as mass acknowledgement, common to said group;
and the method further comprising the following steps, for each group:
- checking (804), for each subgroup in said group, whether an uplink frame has been received from each end device (110, 111, 112) allocated to said subgroup as from the transmission of the previous mass acknowledgement for said group;
- constructing a mass acknowledgement wherein each subgroup of said group is associated with the same information acknowledging said uplink frames received from all the end devices (110, 111, 112) in said subgroup in the case of a positive check, and with the same information not acknowledging any uplink frame received from end devices (110, 111, 112) in said subgroup in the case of a negative check, the mass acknowledgement further including information representing an estimated instant of the next transmission of mass acknowledgement for said group; and
- broadcasting (808) the mass acknowledgement, and acknowledging in unicast mode the uplink frames received that have not been acknowledged by the mass acknowledgement.

2. Method according to claim 1, wherein each subgroup is associated with a bit in a field of the mass acknowledgement, said bit is set to a first predefined value for acknowledging the uplink frames of all the end devices (110, 111, 112) in the associated subgroup and said bit is set to a second predefined value for acknowledging none of the uplink frames of the end devices (110, 111, 112) in the associated subgroup.

3. Method according to either one of claims 1 and 2, wherein each registration-confirmation message further includes time reference information allowing timing synchronisation of the end device (110, 111, 112) in question, and each mass acknowledgement further includes also such time reference information.

4. Method according to claim 3, wherein the information representing an estimated instant of next transmission of mass acknowledgement for a said group is expressed relatively with respect to said time reference.

5. Method according to any one of claims 1 to 4, wherein each mass acknowledgement of each group is broadcast using a broadcasting address constructed on the basis of the addresses of the end devices (110, 111, 112) in said group, replacing with a reserved value the part of said address used to identify a subgroup and the part of said address used to identify a said end device in a said subgroup..

6. Method according to any one of claims 1 to 5, wherein each registration-confirmation message further includes a parameter value K defining, in the address of the end device (110, 111, 112) to which the registration-confirmation message is addressed, the width of representation in number of bits of the subgroups of the group to which said end device (110, 111, 112) is allocated.

7. Method according to claim 6, wherein each registration-confirmation message further includes a parameter value M so that the difference M-K defines, in the address of the end device (110, 111, 112) to which the registration-confirmation message is addressed, the width of representation in number of bits of the identifiers of the end devices (110, 111, 112) of the subgroup concerned.

8. Method according to claim 6, wherein each group identifier implicitly supplies a parameter value M so that the difference M-K defines, in the address of the end device (110, 111, 112) to which the registration-confirmation message is addressed, the width of representation in number of bits of the identifiers of the end devices (110, 111, 112) in the subgroup concerned, the value of the parameter M then being obtained as follows:
- consecutively running through the most significant bits in order to detect at which index the first bit in sequence to have such and such a value starting from the most significant bit is situated; and
- using a predefined conversion table or formula known to said end device (110, 111, 112) and to the server equipment (130) between this index and the value of the parameter M.

9. Method for managing acknowledgement of uplink frames transmitted from end devices (110, 111, 112) to server equipment (130) in a communication system, the method being implemented by each end device (110, 111, 112), the method comprising the following steps:
- transmitting to the server equipment (130) a message requesting registration with the server equipment (130);
- receiving from the server equipment (130) a registration-confirmation message including an address to be used by said end device (110, 111, 112) in order subsequently to communicate in the communication system, part of said address identifying a group to which said end device (110, 111, 112) is allocated, another part of said address identifying a subgroup to which said end device (110, 111, 112) is allocated in said group and yet another part of said address identifying said end device (110, 111, 112) in said subgroup, the registration-confirmation message further including information representing an estimated instant of next transmission of acknowledgement, referred to as mass acknowledgement, common to said group;
- transmitting an uplink frame to the server equipment (130);
- receiving, by broadcast, a mass acknowledgement in which each subgroup in said group is associated with the same information acknowledging or not said uplink frames received from all the end devices (110, 111, 112) in said subgroup, the mass acknowledgement further including information representing an estimated instant of next transmission of mass acknowledgement for said group; and
- receiving an acknowledgement in unicast mode when the uplink frame has not been acknowledged by the mass acknowledgement.

10. Computer program product comprising instructions causing execution of the method according to any one of claims 1 to 8 or of the method according to claim 9, when said instructions are executed by a processor.

11. Information storage medium storing a computer program according to claim 10.

12. Server equipment (130) configured to acknowledge uplink frames transmitted from end devices (110, 111, 112) to the server equipment in a communication system, the server equipment (130) implementing, for each said end device (110, 111, 112):
- means for receiving from said end device (110, 111, 112) a message requesting registration with the server equipment (130);
- means for allocating said end device (110, 111, 112) to a group, and, in said group, to a subgroup;
- means for obtaining an address to be used by said end device (110, 111, 112) for subsequently communicating in the communication system, part of said address identifying said group, another part of said address identifying said subgroup and yet another part of said address identifying said end device (110, 111, 112) in said subgroup;
- means for transmitting to said end device (110, 111, 112) a registration-confirmation message, including the address obtained, as well as information representing an estimated instant of next transmission of acknowledgement, referred to as mass acknowledgement, common to said group.;
and the server equipment (130) implementing, for each group:
- means for checking (804), for each subgroup in said group, whether an uplink frame has been received from each end device (110, 111, 112) allocated to said subgroup as from the transmission of the previous mass acknowledgement for said group;
- means for constructing a mass acknowledgement wherein each subgroup in said group is associated with the same information acknowledging said uplink frames received from all the end devices (110, 111, 112) in said subgroup in the case of a positive check, and with the same information not acknowledging any uplink frame received from end devices (110, 111, 112) in said subgroup in the case of a negative check, the mass acknowledgement further including information representing an estimated instant of next transmission of mass acknowledgement for said group; and
- means for broadcasting (808) the mass acknowledgement, and acknowledging in unicast mode the uplink frames received that have not been acknowledged by the mass acknowledgement.

13. End device (110) configured to manage acknowledgement of uplink frames transmitted to server equipment (130) in a communication system comprising other end devices (110, 111, 112), said end device (110) implementing:
- means for transmitting to the server equipment (130) a request for registration with the server equipment (130) ;
- means for receiving from the server equipment (130) a registration-confirmation message including an address to be used by said end device (110) for subsequently communicating in the communication system, part of said address identifying a group to which said end device (110) is allocated, another part of said address identifying a subgroup to which said end device (110) is allocated in said group and yet another part of said address identifying said end device (110) in said subgroup, the registration-confirmation message further including information representing an estimated instant of next transmission of acknowledgement, referred to as mass acknowledgement, common to said group;
- means for transmitting an uplink frame to the server equipment (130);
- means for receiving, by broadcast, a mass acknowledgement wherein each subgroup in said group is associated with the same information acknowledging or not said uplink frames received from all the end devices (110, 111, 112) in said subgroup, the mass acknowledgement further including information representing an estimated instant of next transmission of mass acknowledgement for said group; and
- means for receiving an acknowledgement in unicast mode when the uplink frame has not been acknowledged by the mass acknowledgement.
